# EUROPEAN PATENT SPECIFICATION

(11) **EP 2 615 046 B1**
(45) Date of publication and mention of the grant of the patent: **24.09.2014**
(21) Application number: 13151079.4
(22) Date of filing: 11.01.2013
(51) Int. Cl.: B65G 21/10, B65G 47/84, B67C 7/00

(54) **Bottle handling system and method**
Anlage und Verfahren zur Behandlung von Flaschen
Système et méthode de manutention de bouteilles

(30) Priority: 11.01.2012 IT TV20120003
(43) Date of publication of application: 17.07.2013
(73) Proprietor: Acqua Minerale San Benedetto S.P.A., 30037 Scorze' (IT)
(72) Inventor: Zoppas, Enrico, 30037 SCORZE' (IT)
(74) Representative: Boggio, Luigi

(56) References cited:
- EP-A1- 1 914 181
- DE-U1- 29 505 245
- DE-U1- 29 722 245

## Description

The present invention relates to a bottle conveyor for bottling systems and the relative method for operating the same.

In particular, the present invention relates to a bottle conveyor configured to carry glass and/or plastic (PET) and/or similar bottles into, or towards, a machine present in a bottling system, such as, for example, a rinsing machine and/or a sterilising machine and/or a filling machine, to which the following will make explicit reference without thus losing its general nature.

As is known, bottling of glass or plastic bottles with liquids for dietary use, such as, for example, beverages (water, soft drinks), is typically performed in bottling systems of large dimensions which perform bottling processes generally comprising one or more steps of rinsing the bottles, typically performed by a rinsing machine, or one or more steps of sanitising/sterilising the bottles, typically performed by a sterilising machine, and at least one subsequent step of filling the bottle with liquid, typically performed by a filling machine.

In particular, rinsing, sterilising and filling machines are generally provided with: a platform rotating around a vertical axis, bottle gripping elements, which are mounted around the external edge of the rotating platform at predetermined angular distances from each other, and are configured to clamp the bottle and hold it coupled to the rotating platform and displace it, taking it to a determined position/angle during rotation of the platform; and liquid injector devices comprising nozzles adapted to deliver a predetermined quantity of liquid into the bottles which, depending on the machine type, may be a rinsing liquid or a sanitising liquid or a liquid for dietary use.

In the bottling systems described above, the bottles are generally transferred from one machine to another by means of carrying circuits or conveyor lines provided with conveyors configured so as to: receive an incoming line of bottles and space the bottles from each other so as to deliver the outgoing bottles at a distance congruent with the distance of the bottle gripping elements present on the rotating platform.

The above conveyors generally comprise a linear conveyor adapted to receive the line of incoming bottles and deliver them appropriately distanced to a rotating bottle transfer conveyor, which is configured so as to clamp the bottles sequentially and carry them along a semicircular transfer path towards a position tangential to the rotating platform, on which the gripping elements clamp the bottles so as to offload them from the rotating transfer conveyor.

In particular, a first type of conveyor is known, wherein the rotating bottle-transfer conveyor generally comprises a rotating bottle-transfer carousel, which is configured so as to clamp the "bottle-body", i.e. the central portion of the bottle present beneath its neck, and to slide the bottles along an underlying sliding plane around the semicircular path, while the linear conveyor generally comprises a bottle conveyor belt, and a bottle distancing mechanism, which is provided with a pair of variable-step screw feeders parallel to and facing each other, which are interposed between the outlet of the conveyor belt and the inlet of the rotating conveyor, and are configured so as to space the bottles according to a predetermined distance corresponding with the loading distance of the bottles onto the rotating transfer carousel.

On the conveyors described above, the presence of the distancing mechanism provided with a double screw feeder makes the system inflexible, since whenever the need to change the height of the bottles due to a change in their format arises, very frequent on filling machines of large dimensions, it is necessary to replace the screw feeders of the distancing mechanism with screw feeders suited to the new format/dimensions, and to regulate the heights of the rotating/linear conveyor and/or the carousel and platform.

It is clear that said maintenance operations are particularly disadvantageous, since, in addition to causing lengthy and costly machine shutdowns, extremely critical in systems of large dimensions, they also cause contamination of the system requiring complex and costly sanitisation operations on the contaminated machine.

A second type of conveyor is also known, wherein the rotating bottle-transfer carousel of the rotating transfer conveyor is configured to clamp the neck of the bottle so as to perform the so-called "neck grip", while the linear conveyor comprises a neck sliding guide configured to support and slide the annular portion carrying the neck of the bottle and a series of air-thrust devices positioned along the sliding guide and adapted to emit air jets towards the bottle in a manner to generate thrust which slides and advances the bottles along the sliding guide and deliver them to the rotating transfer carousel.

Although conveyors of the second type described above are particularly flexible to changes in format, and particularly changes in the height of the bottles, they also present the technical problem of not being adapted to be used to transfer pre-sanitised bottles, i.e. containing a predetermined quantity of sanitising liquid, into a rinsing machine and/or a sterilising machine. In this case, in fact, the air jets emitted by the air-thrust devices are not capable of advancing the bottles along the sliding guide due to their weight.

EP1914181 discloses a method for transporting discrete items (2) by a variable pitch screw (1) that receives the items in downstream of an items feeding device. The screw has a peripheral groove (3) in which the items are housed and displaced, so that a pitch between the items received by the screw is increased in downstream of the screw till an intermediate pitch. The items are transferred and grasped with the intermediate pitch by a pitch changing gear (14) which transfers the items in a receiving device e.g. container processing station, with a final pitch. An independent claim is also included for an installation for changing a pitch between discrete items, comprising a variable pitch screw.

This document discloses the preamble of claim 1.

DE29505245 discloses a conveyor wherein the bottles are fed forward and removed by rotating transmission stars of the handling machine. The inlet or outlet plane of the handling machine with differing bottle sizes is adjusted to unified mouth collar height and the plane of the conveyor (4,5) is matchable to the differing bottle base heights (5,7). Beneath the transmission stars (1) a conveyor (2) transporting the bottles is located with its conveyor plane (4,6) adjustable height-wise to different bottle sizes. At least one end area of the conveyor (2) is located with its conveyor plane height-wise alterable around a rotary point (3) facing away from the transmission star.

The Applicant has therefore conducted a detailed study with the purpose of identifying a solution which specifically achieves the objective of manufacturing a simple and inexpensive conveyor which is easily adapted to a change in the format of the bottles and is also usable to deliver pre-sanitised bottles containing a predetermined quantity of pre-sanitising liquid to a rotating carousel, with grip on the neck, of a machine present in the bottling system.

The object of the present invention is therefore providing a solution which allows said objective to be achieved.

This object is achieved by the present invention insofar as it relates to a bottle conveyor for bottling systems, a method for operating the same, a machine and a bottling system as defined in the appended claims.

The present invention will now be described with reference to the appended drawings, which illustrate a non-limiting example of embodiment, wherein:
- Figure 1 schematically shows a perspective view of a portion of a bottling system provided with a conveyor realised according to the dictates of the present invention;
- Figure 2 is a plan view of the bottling system provided with a conveyor shown in Figure 1;
- Figure 3 is a lateral elevated view of the conveyor shown in Figure 1, with parts in cross-section and parts removed for clarity, wherein the final carrying segment is positioned at a first height with respect to the reference plane, on which the initial carrying segment lies; while
- Figure 4 is a lateral elevated view of the conveyor shown in Figure 1, with parts in cross-section and parts removed for clarity, wherein the final carrying segment is positioned at a second height with respect to the reference plane on which the initial carrying segment lies.

The present invention will now be described in detail with reference to the appended drawings to allow a person skilled in the art to embody and use it. Various changes to the embodiments described will be immediately clear to persons skilled in the art and the general principles described may be applied to other embodiments and applications without deviating from the area of protection of the present innovation, as defined in the appended claims. The present innovation must therefore not be intended as limited to the embodiments described and illustrated, but must be considered as having the widest area of protection according to the principles and features described and claimed herein.

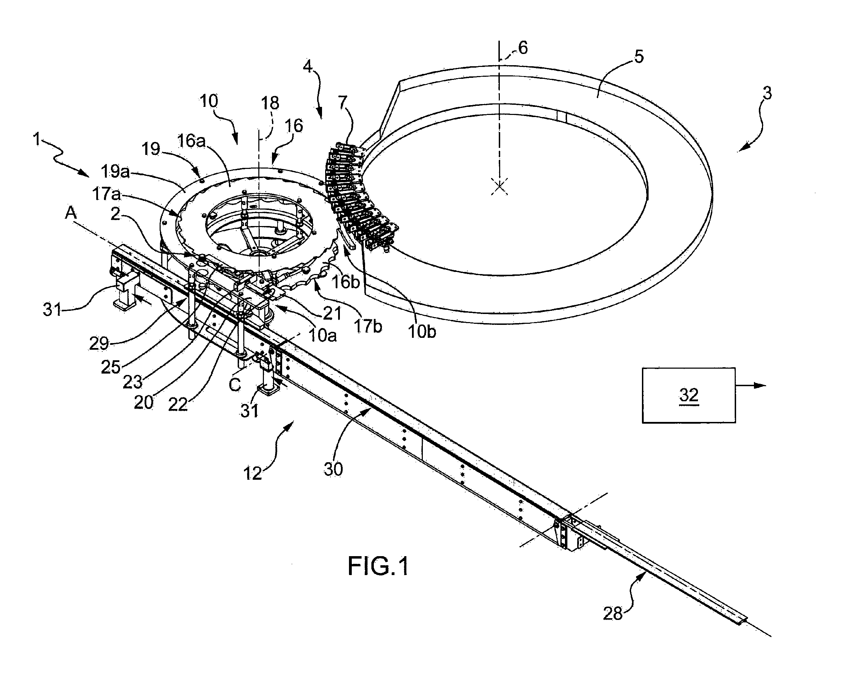

With reference to Figure 1, the number 1 indicates as a whole a bottling conveyor configured to deliver glass and/or plastic (PET) and/or similar bottles 2 into or to a machine 3 present in a bottling system 4.

According to a preferred embodiment shown in Figure 1, the machine 3 may be, for example, a rinsing machine and/or a sterilising machine and/or a filling machine or any other similar machine, while the bottle conveyor 1 may be comprised in the machine 3 itself and/or carry the bottles from one machine 3 to another.

In the example shown in Figure 1, the machine 3 comprises a rotating platform 5 supported by a casing or a frame resting on the ground (not shown) and designed to rotate around a vertical axis 6, and a plurality of bottle gripping elements 7, which are angularly spaced from each other around the edge of the rotating platform 5, and are configured to clamp/hold the bottle 2 so as to keep it coupled to the rotating platform 5 in a determined position/angle during rotation of the platform.

The machine 3 also comprises liquid injector devices (not shown), preferably, but not necessarily, comprising nozzles, which are connected by means of the relative conduits (not shown) to a central manifold containing liquid (not shown), and are designed to inject into the bottles 2, on command, a predetermined quantity of liquid which, depending on the machine type, may be a rinsing liquid, a sanitising liquid or a liquid for dietary use.

According to the invention, and as shown in Figure 1, the conveyor 1 comprises a rotating conveyor 10 configured to: receive the bottles 2 at an inlet 10a, grip the neck 2a of the bottles 2 to carry them along a semicircular path of transfer towards an outlet 10b arranged in a bottle-transfer position tangential to the rotating platform 5, in which the bottle-grip elements 7 sequentially clamps the bottles 2 to transfer them from the rotating conveyor 10 to the rotating platform 5.

The bottle conveyor 1 also comprises a linear conveyor 12, which is interposed between a final segment of a bottle carrying line of the bottling system 4 and the rotating conveyor 10, and is configured to: receive the bottles 2 from the final segment of the bottle carrying line and move the bottles 2, supporting the bottom thereof, along a carrying path which ends at the inlet 10a of the rotating conveyor 10.

The rotating conveyor 10 comprises a bottle-transfer carousel 16, which is designed to rotate around a vertical axis 18, and cooperates with a relative lateral bottle containment guide 19 to move the bottles from the inlet 10a to the outlet 10b along the semicircular transfer path, holding them hanging by gripping the neck 2a.

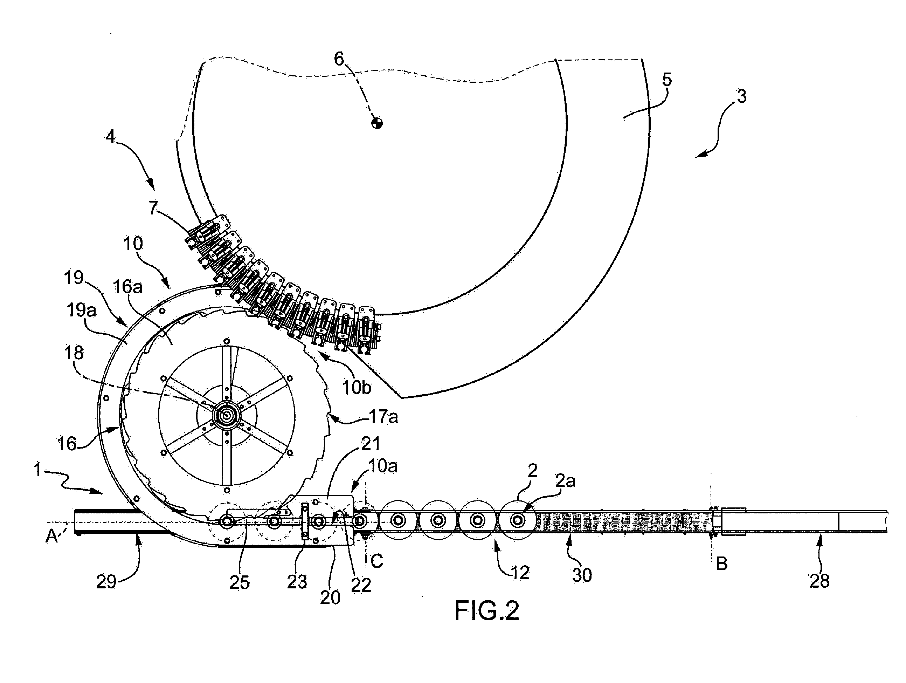

According to a preferred embodiment shown in Figure 2, the bottle-transfer carousel 16 comprises at least one transfer crown 16a coaxial to the vertical axis 18, a central hub coupled to the outlet shaft of a motor, for example an electric motor (not shown) and a series of spokes connecting the central hub to the transfer crown 16a.

Around the outer edge of the transfer crown 16a there is a plurality of hollows or grooves 17a angularly spaced at equal distances from each other, which are shaped to house the neck 2a of the bottle 2, while the bottle containment guide 19 comprises a semicircular section bar 19a adapted to hold the bottles 2 trapped in the grooves 17a of the transfer crown 16a.

In particular, the semicircular section bar 19a is arranged coplanar to the lying surface of the transfer crown 16a and extends immediately adjacent to the latter so as to locally surround a segment of the outer edge thereof facing the semicircular transfer path, and is distanced from the outer edge in a manner to keep the necks 2a of the bottles 2 trapped inside the grooves 17a.

With reference to Figure 1, the bottle-transfer carousel 16 also preferably, but not necessarily, comprises a transfer crown 16b arranged beneath the transfer crown 16a coaxial to the vertical axis 18 and rigidly connected to it by means of known connection elements, for example connection pins.

Around the outer edge of the transfer crown 16b there is a plurality of grooves 17b angularly spaced at equal distances from each other, each of which is associated and vertically aligned with a corresponding groove 17a of the transfer crown 16a and is designed to house the "body of the bottle 2" in a manner to hold said bottle 2 in a substantially vertical position during its displacement along the semicircular transfer path.

With reference to Figure 1, the bottle containment guide 19 also preferably, but not necessarily, comprises a semicircular section bar (not shown) arranged beneath the semicircular section bar 19a coplanar to the lying surface of the transfer crown 16b and extends immediately adjacent to the latter so as to locally surround a segment of the outer edge thereof facing the semicircular transfer path and is distanced from it in a manner to hold the body of the bottles 2 trapped inside the groove 17b of the transfer crown 16b.

With reference to the example illustrated in Figures 1 and 2, the semicircular section bar 19a of the bottle containment guide 19 presents a distal end opposite the distal end facing the rotating platform 5, a straight extension which extends tangentially to the bottle-transfer rotating carousel 16 towards the inlet 10a, and forms a straight guide 20 which delimits together with a straight counter-guide 21 parallel to and distanced from it, an inlet passage or channel 22, which is sized to be crossed by the neck 2a of the bottle 2.

The guide 20 and the straight counter-guide 21 extend parallel to a longitudinal axis A of reference and are coplanar and distanced from each other in a manner that the neck 2a of the bottles 2 may cross the inlet channel 22 and simultaneously an annular carrying portion of the neck 2a of the bottle 2 may slide freely on the surface of the guide 20 and counter-guide 21.

In the preferred embodiment shown in Figures 1 and 2, the guide and the straight counter-guide 20 and 21 are connected to each other by means of a connection bridge 23 which extends transversally to the longitudinal axis A, is arranged spanning the inlet channel 22 and presents centrally, above the inlet channel 22, a recess (not shown) shaped to be crossed by the upper portion of the neck 2a of the bottle 2 when the latter slides along the guide 20 and counter-guide 21.

With reference to the preferred embodiment shown in Figure 2, the straight counter-guide 21 comprises: an elongated sliding plate which extends at inlet 10a, between the straight guide 20 and the bottle-transfer rotating carousel 16 in a constantly coplanar position to the straight guide 20 and to the transfer crown 16a; and a containment frame 25, which defines an extension of the straight counter-guide 21 extending towards the transfer crown 16a in a manner to be locally tangential to it, and has the function of guiding, with the straight guide 20, the neck 2a of the bottle 2 towards the groove 17a of the transfer crown 16a destined to receive said neck 2a during the transfer operation.

According to a preferred embodiment, the containment frame 25 is stably attached onto the upper surface of the elongated sliding plate and extends parallel to the longitudinal axis A, remaining on a lying plane arranged above the transfer crown 16a, parallel to it, in a manner not to interfere with its rotation. The containment frame 25 also presents a free end tangential to the outer edge of the transfer crown 16a in a manner to be positioned each time, during rotation of the carousel 16, above the groove 17a destined to house the neck 2a of the bottle 2 to be transferred.

Linear conveyor 12 extends at least partially beneath the inlet 10a of the rotating conveyor 10 or beneath the guide 20 and the counter-guide 21 and is configured in a manner to carry the bottles 2 supporting the corresponding bottoms thereof and deliver them into the inlet channel 22 of the rotating conveyor 10.

In this embodiment, the linear conveyor 12 comprises a motorised conveyor belt, such as a roller belt or any similar belt, configured to support the bottom of the bottle during its advance.

The linear conveyor 12 essentially comprises an initial bottle carrying segment or section 28 arranged on a predetermined reference plane, preferably horizontal, and a final bottle carrying segment or section 29, which is arranged beneath the guide 20 and the straight counter-guide 21, extends parallel to the longitudinal axis A and is configured so as to be moved orthogonally to said predetermined reference plane so as to vary its distance DH from the lying plane of said guide 20 and straight counter-guide 21.

According to a preferred embodiment, the linear conveyor 12 also comprises an intermediate bottle carrying segment or section 30 which connects the initial bottle carrying segment 28 to the final bottle carrying segment 29, and is configured to vary its inclination with respect to the predetermined reference plane, on the basis of said orthogonal displacement carried out by said initial bottle carrying segment 28.

In particular, said intermediate bottle carrying segment 30 presents its opposite ends connected to the initial bottle carrying segment 28 and the final bottle carrying segment 29 and is configured in a manner to float or oscillate with respect to them.

In the example shown in Figure 1, the intermediate bottle carrying segment 30 presents a distal end hinged to an adjacent end of the initial bottle carrying segment 28, in a manner to oscillate about a rotation axis B transversal to longitudinal axis A, and a distal end hinged to an adjacent end of the final bottle carrying segment 29 in a manner to oscillate about a rotation axis C transversal to longitudinal axis A.

The linear conveyor 12 comprises a raising mechanism 31 designed to displace the final bottle carrying segment 29 orthogonally to the reference plane, and an electronic control unit 32 configured in a manner to control the raising mechanism 31 to ensure it displaces the final segment 29 orthogonally to the predetermined reference plane on the basis of a command, for example a user command or a command generated by a control system, containing information indicating the format and/or height of the bottle to be delivered to the machine.

In the example shown in Figure 1, the raising mechanism 31 is of the electromechanical type and comprises jacks interposed between a support surface and a frame/supporting structure of the final segment 29.

From what is described above, it is nonetheless opportune to specify that the raising mechanism 31 may comprise actuators or any other known apparatus/device capable of displacing the final segment 29 orthogonally to the reference plane, while the initial bottle carrying segment 28 may preferably, but not necessarily, correspond with the final segment of the bottle carrying line.

According to a different embodiment, the raising mechanism 31 comprises mechanical means for manual regulation by means of which it is possible manually to regulate orthogonal displacement of the final bottle carrying segment 29 with respect to a reference plane, from and towards the lying plane of the guide 20 and the straight counter-guide 21 so as to regulate the distance DH.

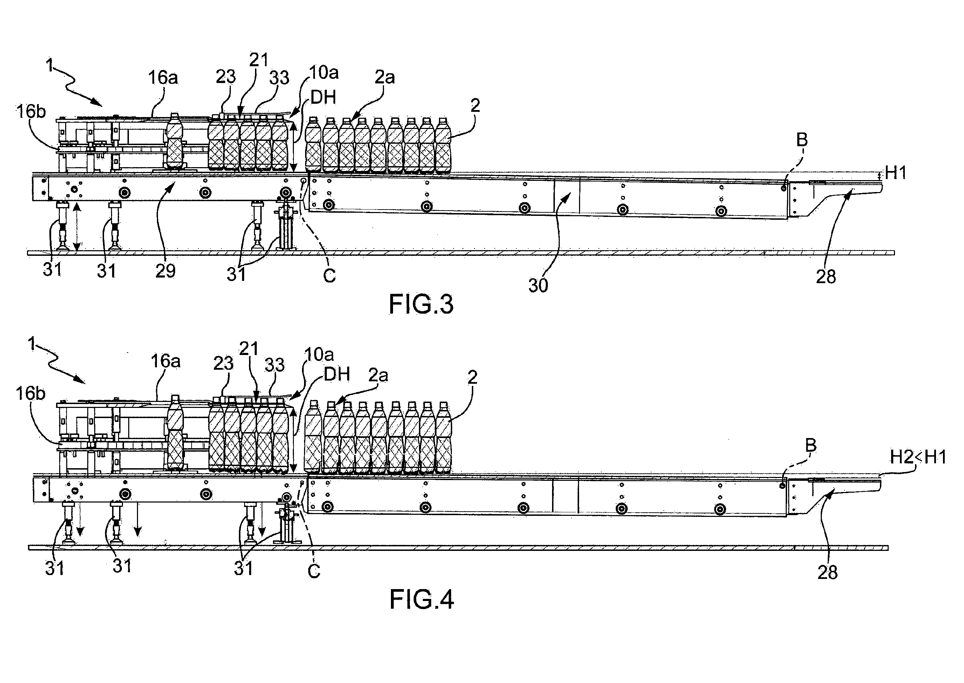

In the example shown in Figures 3 and 4, the rotating conveyor 10 also comprises an upper bracket 33, which extends projecting from the connection bridge 23 and defines an upper containment guide of the bottle 2, with the function of holding the bottles 2 resting on the underlying linear conveyor 12, and in particular on the final segment 29, when said segment reaches the inlet 10a of the rotating conveyor 10.

Preferably, the upper bracket 33 is L-shaped, presents its smaller portion fixed centrally to a connection bridge 23 and its larger portion extending parallel to axis A above the inlet channel 22a in an opposite direction to the connection bridge 23, and presents a lower surface facing the underlying linear conveyor 12, on which the upper end of the bottle 2 is adapted to slide 2.

The operating method of the conveyor 12, for example in the configuration step, envisages the control unit 32 receiving input data indicating the format of the bottle 2, including its height, and controlling the raising mechanism 31 to ensure that it displaces the final carrying segment 29 orthogonally to the reference plane so as to vary the distance DH present between the upper carrying surface of the latter and the lying plane of the guide 20 and the straight counter-guide 21, as a function of the bottle height.

During raising or lowering of the final carrying segment 29, the intermediate segment 30 is hinged to said segment and to the initial carrying segment 28 to incline progressively.

For example, the final bottle carrying segment 29 may be displaced between a first operating condition (shown in Figure 3), in which the final bottle carrying segment 29 is arranged at a height H1 with respect to the reference plane, on which the initial bottle carrying segment 28 lies, and a second operating condition (shown in Figure 4), in which the final carrying segment 29 is arranged at a height H2<H1 with respect to the reference plane.

The conveyor described above presents the advantage of being simple and inexpensive to manufacture, and, thanks to the presence of the linear conveyor configured to regulate the height of its final segment with respect to the reference plane, is easily adapted to a change in the bottle format.

Also, carrying of the bottles on the bottom performed by the linear conveyor described above allows bottles containing sanitising liquid advantageously to be carried and delivered to a rotating carousel with a grip on the neck.

It is also clear that modifications and variants may be made to the conveyor and the operating method described above without thereby deviating from the present invention as defined in the appended claims.

## Claims

1. A bottle conveyor (1) for bottling systems (4) comprising:
- a rotating conveyor (10), which is provided, at an inlet (10a), with sliding guides (20, 21) of the neck (2a) of the bottles (2), and is structured to move the bottles (2) from said inlet (10a) towards an outlet (10b) thereof clamping and retaining the neck (2a) of the bottles (2) so as to hold them hanging along a predetermined semicircular transfer path; the rotating conveyor (10) comprises a bottle-transfer carousel (16), which is designed to rotate around a vertical axis (18), and cooperates with a relative lateral bottle containment guide (19) to move the bottles from said inlet (10a) to the said outlet (10b) along the semicircular transfer path, holding them hanging by gripping the neck (2a); and
- a linear conveyor (12) designed to carry the bottles towards the inlet (10a) of said rotating conveyor (10) supporting the bottom thereof;
said bottle conveyor being **characterized in**:
- the bottle-transfer carousel (16) comprises at least one transfer crown (16a) around the edge of which there is a plurality of hollows or grooves (17a) angularly spaced at equal distances from each other, which are shaped to house the neck (2a) of the bottle (2),
- the bottle containment guide (19) comprises a semicircular section bar (19a) which is designed to hold the neck of the bottles (2) trapped in the grooves (17a) of the transfer crown (16a) and presents in a distal end a straight extension which extends tangentially to the bottle-transfer rotating carousel (16) towards the inlet (10a), and forms a straight guide (20) which delimits together with a straight counter-guide (21) parallel to and distanced from it, an inlet passage or channel (22), which is sized to be crossed by the neck (2a) of the bottle (2);
**that** said linear conveyor (12) comprises:
- an initial bottle carrying segment (28) lying on a predetermined reference plane;
and
- a final bottle carrying segment (29), which is designed to receive the bottles (2) carried by said initial bottle carrying segment (28), is arranged beneath the straight guide (20) and the straight counter-guide (21), and is structured to be moved orthogonally to said predetermined reference plane so as to vary its distance (DH) with respect to the lying plane from said straight guide (20) and straight counter-guide (21).

2. The bottle conveyor according to claim 1, wherein said linear conveyor (12) comprises an intermediate bottle carrying segment (30) which connects the initial bottle carrying segment (28) to the final bottle carrying segment (29), and is structured to vary its inclination with respect to the reference plane, based on said displacement carried out by the final bottle carrying segment (29) orthogonally to said reference plane.

3. The bottle conveyor according to any of the preceding claims, wherein said linear conveyor (12) comprises electromechanical means (31) configured to move said final bottle carrying segment (29) orthogonally to the predetermined reference plane on the basis of the height/format of said bottles.

4. The bottle conveyor according to claim 1 or 2, wherein said linear conveyor (12) comprises means for manually moving said final bottle carrying segment (29) orthogonally to the predetermined reference plane on the basis of the height/format of said bottle (2).

5. The bottle conveyor according to claim 3, comprising an electronic control unit (32) configured to receive data indicative of the height of the bottle (2) and control said electromechanical means (31) to cause the final bottle carrying segment (29) to be moved orthogonally to the predetermined reference plane on the basis of said height.

6. The bottle conveyor according to any of claims 2 to 5, wherein the intermediate bottle carrying segment (30) has a distal end hinged to an adjacent end of the initial bottle carrying segment (28) so as to oscillate about a first rotation axis (B) thereof orthogonal to the final segment (29), and a distal end hinged to an adjacent end of the final segment (29) so as to oscillate about a reference axis (C) parallel to said first rotation axis (B).

7. The bottle conveyor according to any of the preceding claims, wherein said linear conveyor (12) comprises a conveyor belt designed to support the bottom of the bottles (2).

8. The bottle conveyor according to any of the preceding claims, wherein the straight counter-guide (21) comprises:
an elongated sliding plate which extends at inlet (10a), between the straight guide (20) and the bottle-transfer rotating carousel (16) in a constantly coplanar position to the straight guide (20) and to the transfer crown (16a); and
a containment frame (25), which defines an extension of the straight counter-guide (21) extending towards the transfer crown (16a) in a manner to be locally tangential to it, and has the function of guiding, with the straight guide (20), the neck (2a) of the bottle (2) towards the groove (17a) of the transfer crown (16a) which receive said neck (2a) during the transfer operation.

9. The bottle conveyor according to claim 8, wherein the containment frame (25) is stably attached onto the upper surface of the elongated sliding plate and extends parallel to the longitudinal axis (A), remaining on a lying plane arranged above the transfer crown (16a), parallel to it, in a manner not to interfere with its rotation.

10. The bottle conveyor according to claims 8 or 9, wherein said containment frame (259) presents a free end tangential to the outer edge of the transfer crown (16a) in order to be positioned each time, during rotation of the carousel (16), above the groove (17a) destined to house the neck (2a) of the bottle (2) to be transferred.

11. The bottle conveyor according to any of the previous claims, wherein the guide (20) and the straight counter-guide (21) are connected to each other by means of a connection bridge (23) which extends transversally to the longitudinal axis (A), is arranged spanning the inlet channel (22) and presents centrally, above the inlet channel (22), a recess shaped to be crossed by the upper portion of the neck (2a) of the bottle (2) when the latter slides along the guide (20) and counter-guide (21).

12. The bottle conveyor according to claim 11, wherein the rotating conveyor (10) also comprises an upper bracket (33), which extends projecting from the connection bridge (23) and defines an upper containment guide of the bottle (2), with the function of holding the bottles (2) resting on final bottle carrying segment (29), when said segment reaches the inlet (10a) of the rotating conveyor (10).

13. A method for operating a bottle conveyor (1) for bottling systems (4), wherein said bottle conveyor (1) comprises:
- a rotating conveyor (10), which is provided, at an inlet (10a), with sliding guides (20, 21) of the neck (2a) of the bottles (2), and is structured to move the bottles (2) from said inlet (10a) towards a relative outlet (10b) thereof clamping and retaining the neck (2a) of the bottles (2) so as to hold them hanging along a predetermined semicircular transfer path; the rotating conveyor (10) comprises a bottle-transfer carousel (16), which is designed to rotate around a vertical axis (18), and cooperates with a relative lateral bottle containment guide (19) to move the bottles from said inlet (10a) to the said outlet (10b) along the semicircular transfer path, holding them hanging by gripping the neck (2a); the bottle-transfer carousel (16) comprises at least one transfer crown (16a) coaxial to the vertical axis (18) provided with a transfer crown (16a) around the edge of which there is a plurality of hollows or grooves (17a) angularly spaced at equal distances from each other, which are shaped to house the neck (2a) of the bottle (2), the bottle containment guide (19) comprises a semicircular section bar (19a) which is designed to hold the neck of the bottles (2) trapped in the grooves (17a) of the transfer crown (16a) and presents in a distal end a straight extension which extends tangentially to the bottle-transfer rotating carousel (16) towards the inlet (10a), and forms a straight guide (20) which delimits together with a straight counter-guide (21) parallel to and distanced from it, an inlet passage or channel (22), which is sized to be crossed by the neck (2a) of the bottle (2), and
- a linear conveyor (12) designed to transport the bottles towards the inlet (10a) of said rotating conveyor (10) supporting the bottom thereof and comprising an initial bottle carrying segment (28) lying on a predetermined reference plane, and a final bottle carrying segment (29), which is designed to receive the bottles (2) carried by said initial segment (28) and is arranged at least partially below the straight guide (20) and the straight counter-guide (21);
said method being **characterised by** moving said final bottle carrying segment (29) orthogonally to said predetermined reference plane so as to vary the distance (DH) thereof with respect to the lying plane of said the straight guide (20) and the straight counter-guide (21).

14. A rinsing and/or sterilising and/or filling machine (3) for bottling systems (4) **characterised by** comprising a bottle conveyor (1) according to any of claims of claim 1 to 12.

15. A bottling system comprising one or more rinsing and/or sterilising and/or filling machines (3), and one or more bottle conveyors (1) designed to carry/transfer the bottles (2) between said machines (3); said bottling system being **characterised in that** said at least one bottle conveyor (1) is made according to any of claim 1 to 12.

## Patentansprüche

1. Flaschenförderer (1) für Abfüllsysteme (4), umfassend
- einen Rotationsförderer (10), der an einem Einlass (10a) mit Gleitführungen (20, 21) des Halses (2a) der Flaschen (2) versehen ist und der so aufgebaut ist, dass er die Flaschen (2) von dem Einlass (10a) in Richtung eines ihm zugeordneten Auslasses (10b) bewegen kann, wobei der Hals (2a) der Flaschen (2) derart geklemmt und festgehalten wird, dass die Flaschen hängend entlang einer vorgegebenen halbkreisförmigen Transferbahn gehalten werden; wobei der Rotationsförderer (10) ein Flaschentransferkarussell (16) umfasst, welches ausgebildet ist, um um eine vertikale Achse (18) zu rotieren, und mit einer Relativquerflaschenbegrenzungsführung (19) zusammenwirkt, um die Flaschen entlang der halbkreisförmigen Transferbahn von dem Einlass (10a) zu dem Auslass (10b) zu bewegen, wobei sie durch Greifen des Halses (2a) hängend gehalten werden; und
- einen Linearförderer (12), der zum Tragen der Flaschen in Richtung des Einlasses (10a) des Rotationsförderers (10) ausgebildet ist, wobei er deren Boden abstützt;
wobei der Flaschenförderer **dadurch gekennzeichnet ist, dass**:
- das Flaschentransferkarussell (16) wenigstens eine Transferkrone (16a) umfasst, um deren Rand herum eine Vielzahl von Ausnehmungen oder Nuten (17a) angeordnet ist, die winkelmäßig in gleichen Abständen voneinander beabstandet angeordnet sind und die derart geformt sind, dass sie den Hals (2a) der Flasche (2) aufnehmen können,
- die Flaschenbegrenzungsführung (19) eine halbkreisförmige Abschnittstange (19a) umfasst, die zum Halten des Halses der Flaschen (2) ausgebildet ist, welche in den Nuten (17a) der Transferkrone (16a) gefangen sind, und an einem distalen Ende eine gerade Verlängerung aufweist, die sich tangential zu dem Flaschentransferrotationskarussell (16) in Richtung des Einlasses (10a) erstreckt, und welche eine gerade Führung (20) bildet, die zusammen mit einer geraden Gegenführung (21), welche parallel zu ihr und beabstandet von ihr verläuft, eine Einlasspassage oder einen Kanal (22) begrenzt, die oder der so bemessen ist, dass sie oder er von dem Hals (2a) der Flasche (2) durchquert werden kann;
der Linearförderer (12) umfasst:
- ein Anfangsflaschenträgersegment (28), das auf einer vorgegebenen Referenzebene liegt; und
- ein Endflaschenträgersegment (29), welches zur Aufnahme der Flaschen (2) ausgebildet ist, die von dem Anfangsflaschenträgersegment (28) getragen werden, ist unterhalb der geraden Führung (20) und der geraden Gegenführung (21) angeordnet und ist so aufgebaut, dass es senkrecht zu der vorgegebenen Referenzebene bewegt werden kann, um seinen Abstand (DH) im Hinblick auf die liegende Ebene der geraden Führung (20) und der geraden Gegenführung (21) zu variieren.

2. Flaschenförderer nach Anspruch 1, wobei der Linearförderer (12) ein Zwischenflaschenträgersegment (30) umfasst, welches das Anfangsflaschenträgersegment (28) mit dem Endflaschenträgersegment (29) verbindet und so aufgebaut ist, dass es auf Grundlage der Verschiebung, welche das Endflaschenträgersegment (29) senkrecht zu der Referenzebene erfahren hat, seine Neigung im Hinblick auf die Referenzebene variieren kann.

3. Flaschenförderer nach irgendeinem der vorangehenden Ansprüche, wobei der Linearförderer (12) elektromechanische Mittel (31) umfasst, welche dazu ausgelegt sind, auf Grundlage der Höhe/des Formats der Flaschen das Endflaschenträgersegment (29) senkrecht zu der vorgegebenen Referenzebene zu bewegen.

4. Flaschenförderer nach Anspruch 1 oder 2, wobei der Linearförderer (12) Mittel zum manuellen Bewegen des Endflaschenträgersegments (29) senkrecht zu der vorgegebenen Referenzebene auf Grundlage der Höhe/des Formats der Flasche (2) umfasst.

5. Flaschenförderer nach Anspruch 3, umfassend eine elektronische Steuereinheit (32), die dazu ausgelegt ist, für die Höhe der Flasche (2) repräsentative Daten zu empfangen und die elektromechanischen Mittel (31) so zu steuern, dass das Endflaschenträgersegment (29) auf Grundlage der Höhe senkrecht zu der vorgegebenen Referenzebene bewegt wird.

6. Flaschenförderer nach irgendeinem der Ansprüche 2-5, wobei das Zwischenflaschenträgersegment (30) ein distales Ende aufweist, das an ein angrenzendes Ende des Anfangsflaschenträgersegments (28) so angelenkt ist, dass es um eine ihm zugeordnete erste Rotationsachse (B) oszillieren kann, die senkrecht zu dem Endsegment (29) verläuft, und ein distales Ende aufweist, das an ein angrenzendes Ende des Endsegments (29) so angelenkt ist, dass es um eine Referenzachse (C) oszillieren kann, die parallel zu der ersten Rotationsachse (B) verläuft.

7. Flaschenförderer nach irgendeinem der vorangehenden Ansprüche, wobei der Linearförderer (12) ein Förderband umfasst, welches dazu ausgebildet ist, den Boden der Flaschen (2) abzustützen.

8. Flaschenförderer nach irgendeinem der vorangehenden Ansprüche, wobei die gerade Gegenführung (21) umfasst:
eine längliche Gleitplatte, welche sich an dem Einlass (10a) in einer konstant koplanaren Position zu der geraden Führung (20) und der Transferkrone (16a) zwischen der geraden Führung (20) und dem Flaschentransferrotationskarussell (16) erstreckt; und
einen Begrenzungsrahmen (25), der eine Verlängerung der geraden Gegenführung (21) definiert, die sich in einer Weise in Richtung der Transferkrone (16a) erstreckt, dass sie lokal tangential zu ihr verläuft, und der die Funktion hat, den Hals (2a) der Flasche (2) mit der geraden Führung (20) in Richtung der Nut (17a) der Transferkrone (16a) zu führen, welche den Hals (2a) während der Transferoperation aufnimmt.

9. Flaschenförderer nach Anspruch 8, wobei der Begrenzungsrahmen (25) fest an der oberen Fläche der länglichen Gleitplatte befestigt ist und sich parallel zu der Längsachse (A) erstreckt, wobei er in einer Weise auf einer liegenden Ebene verbleibt, die oberhalb der Transferkrone (16a) parallel zu dieser angeordnet ist, dass er nicht mit der Rotation der Transferkrone kollidiert.

10. Flaschenförderer nach Anspruch 8 oder 9, wobei der Begrenzungsrahmen (25) ein freies Ende aufweist, das tangential zu der Außenkante der Transferkrone (16a) verläuft, um jedes Mal während der Rotation des Karussells (16) oberhalb der Nut (17a) positioniert zu sein, die dazu bestimmt ist, den Hals (2a) der zu transferierenden Flasche (2) aufzunehmen.

11. Flaschenförderer nach einem der vorangehenden Ansprüche, wobei die Führung (20) und die gerade Gegenführung (21) miteinander mittels einer Verbindungsbrücke (23) verbunden sind, die sich quer zu der Längsachse (A) erstreckt, in einer den Einlasskanal (22) überspannenden Weise angeordnet ist und mittig oberhalb des Einlasskanals (22) eine Aussparung aufweist, die so geformt ist, dass sie von dem oberen Bereich des Halses (2a) der Flasche (2) durchquert werden kann, wenn Letztere entlang der Führung (20) und der Gegenführung (21) gleitet.

12. Flaschenförderer nach Anspruch 11, wobei der Rotationsförderer (10) auch einen oberen Ausleger (33) umfasst, der sich von der Verbindungsbrücke (23) wegragend erstreckt und eine obere Begrenzungsführung der Flasche (2) bildet, mit der Funktion des Haltens der Flaschen (2) in einem auf dem Endflaschenträgersegment (29) ruhenden Zustand, wenn das Segment den Einlass (10a) des Rotationsförderers (10) erreicht.

13. Verfahren zum Betreiben eines Flaschenförderers (1) für Abfüllsysteme (4), wobei der Flaschenförderer (1) umfasst:
- einen Rotationsförderer (10), der an einem Einlass (10a) mit Gleitführungen (20, 21) des Halses (2a) der Flaschen (2) versehen ist und der so aufgebaut ist, dass er die Flaschen (2) von dem Einlass (10a) in Richtung eines ihm zugeordneten Auslasses (10b) bewegen kann, wobei der Hals (2a) der Flaschen (2) derart geklemmt und festgehalten wird, so dass die Flaschen hängend entlang einer vorgegebenen halbkreisförmigen Transferbahn gehalten werden; wobei der Rotationsförderer (10) ein Flaschentransferkarussell (16) umfasst, welches ausgebildet ist, um um eine vertikale Achse (18) zu rotieren, und mit einer Relativquerflaschenbegrenzungsführung (19) zusammenwirkt, um die Flaschen entlang der halbkreisförmigen Transferbahn von dem Einlass (10a) zu dem Auslass (10b) zu bewegen, wobei sie durch Greifen des Halses (2a) hängend gehalten werden; das Flaschentransferkarussell (16) umfasst wenigstens eine Transferkrone (16a), die koaxial zu der mit einer Transferkrone (16a) zur Verfügung gestellten vertikalen Achse (18) angeordnet ist, um deren Rand herum eine Vielzahl von Ausnehmungen oder Nuten (17a) angeordnet ist, die winkelmäßig in gleichen Abständen voneinander beabstandet angeordnet sind und die derart geformt sind, dass sie den Hals (2a) der Flasche (2) aufnehmen können, die Flaschenbegrenzungsführung (19) umfasst eine halbkreisförmige Abschnittstange (19a), die zum Halten des Halses der Flaschen (2) ausgebildet ist, welche in den Nuten (17a) der Transferkrone (16a) gefangen sind, und an einem distalen Ende eine gerade Verlängerung aufweist, die sich tangential zu dem Flaschentransferrotationskarussell (16) in Richtung des Einlasses (10a) erstreckt, und welche eine gerade Führung (20) bildet, die zusammen mit einer geraden Gegenführung (21), welche parallel zu ihr und beabstandet von ihr verläuft, eine Einlasspassage oder einen Kanal (22) begrenzt, die oder der so bemessen ist, dass sie oder er von dem Hals (2a) der Flasche (2) durchquert werden kann,
und
- einen Linearförderer (12), der dazu ausgelegt ist, die Flaschen in Richtung des Einlasses (10a) des Rotationsförderers (10) zu fördern, wobei er deren Boden abstützt, und der ein Anfangsflaschenträgersegment (28), welches auf einer vorgegebenen Referenzebene liegt, sowie ein Endflaschenträgersegment (29) aufweist, das so ausgebildet ist, dass es die von dem Anfangssegment (28) getragenen Flaschen (2) aufnehmen kann, und das wenigstens teilweise unterhalb der geraden Führung (20) und der geraden Gegenführung (21) angeordnet ist;
wobei das Verfahren **gekennzeichnet ist durch** Bewegen des Endflaschenträgersegments (29) senkrecht zu der vorgegebenen Referenzebene, um dessen Abstand (DH) im Hinblick auf die liegende Ebene der geraden Führung (20) und der geraden Gegenführung (21) zu variieren.

14. Spül- und/oder Sterilisier- und/oder Füllmaschine (3) für Abfüllsysteme (4), **dadurch gekennzeichnet, dass** sie einen Flaschenförderer (1) nach irgendeinem Anspruch der Ansprüche 1-12 umfasst.

15. Abfüllsystem umfassend eine oder mehrere Spül- und/oder Sterilisier- und/oder Füllmaschinen (3) sowie einen oder mehrere Flaschenförderer (1), die dazu ausgebildet sind, die Flaschen (2) zwischen den Maschinen (3) zu tragen/transferieren; wobei das Abfüllsystem **dadurch gekennzeichnet ist, dass** wenigstens ein Flaschenförderer (1) gemäß irgendeinem der Ansprüche 1-12 ausgebildet ist.

## Revendications

1. Convoyeur de bouteilles (1) pour systèmes d'embouteillage (4), comprenant :
- un convoyeur rotatif (10) pourvu, à une entrée (10a), de guides (20, 21) de coulissement du goulot (2a) des bouteilles (2), et structuré pour déplacer les bouteilles (2) de ladite entrée (10a) vers une sortie (10b) de celui-ci, bloquant et retenant le goulot (2a) des bouteilles (2) afin de les maintenir suspendues le long d'une trajectoire de transfert semi-circulaire prédéterminée ; le convoyeur rotatif (10) comprenant un carrousel de transfert de bouteilles (16) conçu pour tourner autour d'un axe vertical (18) et coopérant avec un guide latéral associé de confinement de bouteilles (19) permettant de déplacer les bouteilles de ladite entrée (10a) vers ladite sortie (10b) le long de la trajectoire de transfert semicirculaire, en les maintenant suspendues par préhension du goulot (2a) ; et
- un convoyeur linéaire (12) conçu pour transporter les bouteilles vers l'entrée (10a) dudit convoyeur rotatif (10), et supportant la base de celles-ci ;
ledit convoyeur de bouteilles étant **caractérisé en ce que**
- le carrousel de transfert de bouteilles (16) comprend au moins une couronne de transfert (16a) dont le bord est pourvu, sur son pourtour, d'une pluralité d'évidements ou rainures (17a) espacés angulairement à égale distance les un(e)s des autres, et configurés pour loger le goulot (2a) de la bouteille (2),
- le guide de confinement de bouteilles (19) comprend une barre profilée semi-circulaire (19a) conçue pour retenir le goulot des bouteilles (2) emprisonné dans les rainures (17a) de la couronne de transfert (16a) et qui présente, à une extrémité distale, une extension rectiligne qui s'étend tangentiellement au carrousel rotatif de transfert de bouteilles (16) vers l'entrée (10a), et forme un guide rectiligne (20) qui délimite, avec un contre-guide rectiligne (21) parallèle à et situé à distance de celui-ci, un passage ou canal d'entrée (22) dimensionné pour être traversé par le goulot (2a) de la bouteille (2) ;
**en ce que** ledit convoyeur linéaire (12) comprend :
- un segment initial de transport de bouteilles (28) reposant sur un plan de référence prédéterminé ; et
- un segment final de transport de bouteilles (29), lequel est conçu pour recevoir les bouteilles (2) transportées par ledit segment initial de transport de bouteilles (28), est disposé au-dessous du guide rectiligne (20) et du contre-guide rectiligne (21), et structuré pour être déplacé orthogonalement audit plan de référence prédéterminé de manière à faire varier sa distance (DH) par rapport au plan de pose dudit guide rectiligne (20) et dudit contre-guide rectiligne (21).

2. Convoyeur de bouteilles selon la revendication 1, dans lequel ledit convoyeur linéaire (12) comprend un segment intermédiaire de transport de bouteilles (30) qui relie le segment initial de transport de bouteilles (28) au segment final de transport de bouteilles (29) et est structuré pour faire varier son inclinaison par rapport au plan de référence, sur la base dudit déplacement opéré par le segment final de transport de bouteilles (29) orthogonalement audit plan de référence.

3. Convoyeur de bouteilles selon l'une quelconque des revendications précédentes, dans lequel ledit convoyeur linéaire (12) comprend des moyens électromécaniques (31) configurés pour déplacer ledit segment final de transport de bouteilles (29) orthogonalement au plan de référence prédéterminé sur la base de la hauteur/ du format desdites bouteilles.

4. Convoyeur de bouteilles selon la revendication 1 ou 2, dans lequel ledit convoyeur linéaire (12) comprend des moyens pour déplacer manuellement ledit segment final de transport de bouteilles (29) orthogonalement au plan de référence prédéterminé sur la base de la hauteur/du format de ladite bouteille (2).

5. Convoyeur de bouteilles selon la revendication 3, comprenant une unité de commande électronique (32) configurée pour recevoir des données indiquant la hauteur de la bouteille (2) et commander lesdits moyens électromécaniques (31) afin d'opérer le déplacement du segment final de transport de bouteilles (29) orthogonalement au plan de référence prédéterminé sur la base de ladite hauteur.

6. Convoyeur de bouteilles selon l'une quelconque des revendications 2 à 5, dans lequel le segment intermédiaire de transport de bouteilles (30) comprend une extrémité distale articulée sur une extrémité adjacente du segment initial de transport de bouteilles (28) de façon à osciller autour d'un premier axe de rotation (B) de celui-ci orthogonalement au segment final (29), et une extrémité distale articulée sur le segment final (29) de façon à osciller autour d'un axe de référence (C) parallèle audit premier axe de rotation (B).

7. Convoyeur de bouteilles selon l'une quelconque des revendications précédentes, dans lequel ledit convoyeur linéaire (12) comprend une courroie transporteuse destinée à supporter la base des bouteilles (2).

8. Convoyeur de bouteilles selon l'une quelconque des revendications précédentes, dans lequel le contre-guide rectiligne (21) comprend :
une plaque coulissante allongée qui s'étend à l'entrée (10a), entre le guide rectiligne (20) et le carrousel rotatif de transfert de bouteilles (16), dans une position constamment coplanaire au guide rectiligne (20) et à la couronne de transfert (16a) ; et
un châssis de confinement (25) qui définit une extension du contre-guide rectiligne (21) s'étendant vers la couronne de transfert (16a) de façon à lui être localement tangentiel, et ayant pour fonction de guider, avec le guide rectiligne (20), le goulot (2a) de la bouteille (2) vers la rainure (17a) de la couronne de transfert (16a) qui reçoit ledit goulot (2a) pendant l'opération de transfert.

9. Convoyeur de bouteilles selon la revendication 8, dans lequel le châssis de confinement (25) est fixé de façon stable sur la surface supérieure de la plaque coulissante allongée et s'étend parallèlement à l'axe longitudinal (A), sur un plan situé au-dessus de la couronne de transfert (16a), parallèle à celle-ci, de façon à ne pas faire obstacle à sa rotation.

10. Convoyeur de bouteilles selon les revendications 8 ou 9, dans lequel ledit châssis de confinement (25) présente une extrémité libre tangentielle au bord extérieur de la couronne de transfert (16a) afin d'être positionnée chaque fois, pendant la rotation du carrousel (16), au-dessus de la rainure (17a) destinée à loger le goulot (2a) de la bouteille (2) à transférer.

11. Convoyeur de bouteilles selon l'une quelconque des revendications précédentes, dans lequel le guide (20) et le contre-guide rectiligne (21) sont reliés entre eux par un pont de liaison (23) qui s'étend transversalement à l'axe longitudinal (A), enjambe le canal d'entrée (22) et présente centralement, au-dessus du canal d'entrée (22), un évidement conformé pour être traversé par la partie supérieure du goulot (2a) de la bouteille (2) lorsque celle-ci glisse le long du guide (20) et du contre-guide (21).

12. Convoyeur de bouteilles selon la revendication 11, dans lequel le convoyeur rotatif (10) comprend également un support supérieur (33) qui s'étend en saillie à partir du pont de liaison (23) et définit un guide de confinement supérieur de la bouteille (2), et dont la fonction consiste à retenir les bouteilles (2) reposant sur le segment final de transport de bouteilles (29), lorsque ledit segment atteint l'entrée (10a) du convoyeur rotatif (10).

13. Procédé pour faire fonctionner un convoyeur de bouteilles (1) destiné à des systèmes d'embouteillage (4), dans lequel ledit convoyeur de bouteilles (1) comprend :
- un convoyeur rotatif (10) pourvu, à une entrée (10a), de guides (20, 21) de coulissement du goulot (2a) des bouteilles (2), et structuré pour déplacer les bouteilles (2) de ladite entrée (10a) vers une sortie (10b) associée de celui-ci, bloquant et retenant le goulot (2a) des bouteilles (2) afin de les maintenir suspendues le long d'une trajectoire de transfert semi-circulaire prédéterminée ; le convoyeur rotatif (10) comprenant un carrousel de transfert de bouteilles (16) conçu pour tourner autour d'un axe vertical (18) et coopérant avec un guide latéral associé de confinement de bouteilles (19) permettant de déplacer les bouteilles de ladite entrée (10a) vers ladite sortie (10b) le long de la trajectoire de transfert semicirculaire, en les maintenant suspendues par préhension du goulot (2a) ; et le carrousel de transfert de bouteilles (16) comprenant au moins une couronne de transfert (16a) coaxiale à l'axe vertical (18) dont le bord est pourvu, sur son pourtour, d'une pluralité d'évidements ou rainures (17a) espacés angulairement à égale distance les un(e)s des autres, et configurés pour loger le goulot (2a) de la bouteille (2), le guide de confinement de bouteilles (19) comprenant une barre profilée semi-circulaire (19a) conçue pour retenir le goulot des bouteilles (2) emprisonné dans les rainures (17a) de la couronne de transfert (16a) et qui présente à une extrémité distale une extension rectiligne qui s'étend tangentiellement au carrousel rotatif de transfert de bouteilles (16) vers l'entrée (10a), et forme un guide rectiligne (20) qui délimite, avec un contre-guide rectiligne (21) parallèle à et situé à distance de celui-ci, un passage ou canal d'entrée (22) dimensionné pour être traversé par le goulot (2a) de la bouteille (2),
et
- un convoyeur linéaire (12) conçu pour transporter les bouteilles vers l'entrée (10a) dudit convoyeur rotatif (10), supportant la base de celles-ci et comprenant un segment initial de transport de bouteilles (28) reposant sur un plan de référence prédéterminé ; et un segment final de transport de bouteilles (29), conçu pour recevoir les bouteilles (2) transportées par ledit segment initial de transport de bouteilles (28), et disposé au moins partiellement au-dessous du guide rectiligne (20) et du contre-guide rectiligne (21) ;
ledit procédé étant **caractérisé par** le déplacement dudit segment final de transport de bouteilles (29) orthogonalement audit plan de référence prédéterminé de manière à faire varier sa distance (DH) par rapport au plan de pose dudit guide rectiligne (20) et dudit contre-guide rectiligne (21).

14. Machine de rinçage et/ou de stérilisation et/ou remplissage (3) pour systèmes d'embouteillage (4), **caractérisée en ce qu'**elle comprend un convoyeur de bouteilles (1) selon l'une quelconque des revendications 1 à 12.

15. Système d'embouteillage comprenant une ou plusieurs machines de rinçage et/ou stérilisation et/ou remplissage (3), et un ou plusieurs convoyeurs (1) conçus pour transporter/transférer les bouteilles (2) entre lesdites machines (3) ; ledit système d'embouteillage étant **caractérisé en ce que** ledit au moins un convoyeur de bouteilles (1) est réalisé selon l'une quelconque des revendications 1 à 12.
